# EUROPEAN PATENT APPLICATION

(11) **EP 1 220 126 A2**
(43) Date of publication of application: **03.07.2002**
(21) Application number: 01130697.4
(22) Date of filing: 21.12.2001
(51) Int. Cl.: G06F 17/60

(54) **Method, apparatus, and system for synchronizing timing of an auction through a computer network**

(30) Priority: 29.12.2000 US 259432 P; 27.03.2001 US 818729
(71) Applicant: Freemarkets, Inc., Pittsburgh, PA 15222 (US)
(72) Inventor: Abeshouse, Daniel, Edgewood, PA 15218 (US); Atkinson, Scott W., Pittsburg, PA 15232 (US); Bernard, Anthony F., Wexford, PA 15090 (US); Heckmann, Daniel C., Pittsburg, PA 15227 (US); Monroe, Robert T., Pittsburg, PA 15218 (US); Rago, Vincent F., Occidental, CA 95465 (US); Rupp, William D., Mt. Lebanon, PA 15228 (US)
(74) Representative: Röthinger, Rainer

(57) **Abstract**

A method of synchronizing a closing of a network auction is disclosed. The method includes determining a message travel time between a participant processor and an auction processor, establishing a sponsor auction time at the auction processor, calculating a bidder auction time by adding the message travel time to the auction processor time, setting a participant processor clock to the bidder auction time, and accepting a bid at the auction processor only if the bid was sent prior to a predetermined closing time. A method of validating that a bid is placed by a participant processor networked with an auction processor prior to a predetermined end of bidding time is also disclosed. The method includes setting a time clock at a participant processor to an auction time and accepting a bid at the auction processor only until the predetermined end of bidding time has occurred, according to the participant processor time clock. A method of verifying that a bid is placed prior to an end of bidding time is also disclosed. That method includes ordering messages received from a networked participant processor, receiving an auction closed message from the participant processor at a networked auction processor, and accepting a bid at the auction processor, placed by the participant processor, only if a message containing the bid is ordered prior to the end of bidding message. Systems and devices that perform those methods are also disclosed.

## Description

### CROSS-REFERENCE TO RELATED APPLICATIONS

This application claims priority of copending United States Provisional Application No. 60/259,432, filed December 29, 2000, which is incorporated by reference herein in its entirety.

### STATEMENT REGARDING FEDERALLY SPONSORED RESEARCH

Not Applicable.

### BACKGROUND OF THE INVENTION

### Field of the Invention

The disclosed invention relates generally to synchronizing time across a network, and in particular, to synchronizing the closing of an on-line auction.

### Description of the Background

Procurement of goods and services have traditionally involved high transaction costs. The cost of finding and qualifying potential bidders has been particularly high. The advent of electronic commerce has introduced new methods of procurement that lower some of the transaction costs associated with procurement. Electronic procurement, in particular business-to-business electronic procurement, matches buyers and suppliers and facilitates transactions that take place on networked processors.

Four models of electronic procurement have been developed: catalog, buyer-bidding auctions, seller-bidding auctions, and exchange marketplaces.

The "catalog" model was an early form of online electronic procurement. Initially, electronic catalogs were developed primarily by sellers, typically suppliers, to help customers obtain information about products, and order supplies electronically. Those first electronic catalogs were single-source; i.e., they only allowed customers to obtain information and products from that supplier.

Although the first electronic catalogs reduced the information search cost associated with procurement, customers were disadvantageously "locked in" to one supplier at each electronic catalog. Customers were thus unable to compare a number of competing products in a single catalog. Therefore, certain suppliers with single-source catalogs began including competitors' products in their systems. The inclusion of competing products in electronic catalogs reduced procurement information search costs even further. By offering competing products, electronic catalogs became "electronic markets."

Many electronic catalogs, however, were biased toward the supplier offering the electronic catalog, and it was thought that procurement costs could be lowered further through an unbiased market. Therefore, third-party "market makers" developed markets for many standard products and services, which were intended to be unbiased markets.

Electronic commerce using the electronic catalog model typically involves one buyer and one seller at a time. When many buyers compete for the right to buy from one seller, a buyer-bidding auction model, or forward auction, is created. Catalog and buyer-bidding auction models, however, have limitations and do not work well in every situation. For example, it is difficult for a supplier to publish set prices in a catalog for custom products. Therefore, when a buyer requires a custom product, pricing for that product typically will not be found in a catalog. Likewise, it is difficult to specify a custom product and identify buyers who might use that custom product for a buyer-bidding auction. Additionally, there may be only one buyer interested in a custom product, such that a buyer-bidding auction may not be applicable in all cases. Thus, few suppliers can typically provide custom goods and services and standard product and pricing information is typically not available for buyers of custom industrial products.

Referring again to the cost of traditional procurement, and particularly procurement of custom products and services, when a company required a custom product, a buyer for the company would typically procure the product by searching for potential suppliers and then acquire price quotes from the potential suppliers for the needed custom product. The search tended to be slow and random, and typically relied heavily on personal relationships. The costs associated with locating vendors, comparing prices, and negotiating a deal were therefore large. The cost of switching suppliers was also large, such that an incumbent supplier's quoted price was most likely not the lowest price he could offer because the incumbent supplier knew the buyer would face switching costs to use another supplier. As an additional consequence, new suppliers had a difficult time entering the market because of those high switching costs.

Therefore, supplier-bidding auctions for products and services defined by a buyer have been developed. The assignee of the present application has developed a system in which sellers downwardly bid against one another across a network to achieve the lowest market price in a supplier-bidding auction. In such auctions, the auction typically has strict opening and closing times so that all bidders have equal ability to place bids throughout the auction and, particularly, to place bids in response to other bids prior to closing. Networks, however, have a latency time equal to the time that it takes for a message to cross the network and arrive at the auction processor.

Thus, there is a need for a system, apparatus and process whereby a sponsor may synchronize an end of bidding time with processors across a network. There is a further need to accept bids from participant processors that are sent at a time that the bidder utilizing that processor perceives as a valid time for submitting a bid. There is also a need to prevent a bidder from maliciously altering the auction time at its processor to unfairly enable itself to place a bid after the auction has closed.

### SUMMARY OF THE INVENTION

In accordance with one form of the present invention, there is provided a method, system, and apparatus for synchronizing a closing of a network auction. In one embodiment, the method includes determining a message travel time between a participant processor and an auction processor, establishing a sponsor auction time at the auction processor, calculating a bidder auction time by adding the message travel time to the auction processor time, setting a participant processor clock to the bidder auction time, and accepting a bid at the auction processor only if the bid was sent prior to a predetermined closing time.

In another embodiment, a method of validating that a bid is placed by a networked processor prior to a predetermined end of bidding time is also disclosed. The method includes setting a time clock at a participant processor to an auction time and accepting a bid at the auction processor only until the predetermined end of bidding time has occurred, according to the participant processor time clock.

In accordance with yet a further embodiment, a method of verifying that a bid is placed prior to an end of bidding time is also disclosed. That method includes ordering messages received from a networked participant processor, receiving an end of bidding message from the participant processor at a networked auction processor, and accepting a bid at the auction processor, placed by the participant processor, only if a message containing the bid is ordered prior to the end of bidding message.

The present invention also includes a system for synchronizing a closing of a network auction. That system includes an auction processor attached to a network, and a participant processor attached to the network. The auction processor contains instructions which, when executed by the processor, cause the processor to determine a message travel time between the participant processor and the auction processor, establish a sponsor auction time, calculate a bidder auction time by adding the message travel time to the auction processor time, send a participant processor clock setting to the participant processor, and accept a bid from the participant processor only if the bid was sent prior to a predetermined end of bidding time.

The present invention also includes a bidding device operated by a bidder during an online auction and coupled to an auction processor via a network. The bidding device includes a clock, and a processor coupled to the clock, the processor having instructions that, when executed by the processor set said clock to a bidder auction time.

Thus, the present invention provides methods, apparatuses and systems of synchronizing time clocks of network connected processors.

The present invention also beneficially provides methods, apparatuses and systems for determining whether a submitted bid should be accepted when it is sent from a participant processor prior to closing time as perceived at the auction processor, but is received by the auction processor after the auction processor perceived closing time. Furthermore, the present invention provides methods, apparatuses and systems for determining whether a submitted bid should be accepted when it is sent from a participant processor prior to closing time as perceived at the participant processor, but after the auction processor perceived closing time.

Accordingly, the present invention provides solutions to the shortcomings of prior online auctions. Those of ordinary skill in the art will readily appreciate, therefore, that those and other details, features, and advantages will become further apparent in the following detailed description of the preferred embodiments.

### BRIEF DESCRIPTION OF THE DRAWINGS

The accompanying drawings, wherein like reference numerals are employed to designate like parts or steps, are included to provide a further understanding of the invention, are incorporated in and constitute a part of this specification, and illustrate embodiments of the invention that together with the description serve to explain the principles of the invention.

In the drawings:
Figure 1A is a schematic illustration of the entities involved in an embodiment of an auction wherein the sponsor identifies goods or services to be purchased in a request for quotation;
Figure 1B is a schematic illustration of entities participating in an embodiment of an auction;
Figure 1C is a schematic illustration of entities participating in an embodiment of a contract award following an auction;
Figure 2 is a schematic illustration of communications links between the coordinator, the buyer, and the suppliers in an embodiment of an auction;
Figure 3 is a schematic illustration of auction software and computers hosting that software in an embodiment of an auction;
Figure 4 is a schematic illustration of an embodiment of an auction network;
Figure 5 is a flow diagram illustrating a method of synchronizing auction time, in accordance with the present invention;
Figure 6 is a flow diagram illustrating a method of determining network latency, in accordance with the present invention;
Figure 7 is a flow diagram illustrating another method of determining network latency, in accordance with the present invention;
Figure 8 is a time line illustrating a method of passing network latency calculation messages between an auction processor and a participant processor, in accordance with the present invention;
Figure 9 is an auction time line illustrating an auction segment wherein an auction processor, a first participant processor, and a second participant processor interact in accordance with the present invention;
Figure 10 is another auction time line that illustrates an auction segment in which a participant processor is non-responsive, in accordance with the present invention;
Figure 11 is another auction time line that illustrates an auction segment in which a late bid is submitted and accepted, but does not trigger overtime bidding, in accordance with the present invention; and
Figure 12 is yet another auction time line that illustrates an auction segment in which a participant processor is permitted to change to an open state to provide an opportunity for a bidder utilizing that processor to respond to a late bid submitted by another bidder, in accordance with the present invention.

### DETAILED DESCRIPTION

Reference will now be made in detail to the preferred embodiments of the present invention, examples of which are illustrated in the accompanying drawings. It is to be understood that the figures and descriptions of the present invention included herein illustrate and describe elements that are of particular relevance to the present invention, while eliminating, for purposes of clarity, other elements found in typical auction systems and computer networks. The present invention described below extends the operation of the inventive auction systems and methods described in greater detail in copending United States Patent Application Serial Number 09/252,790, entitled "Method and System for Conducting Electronic Auctions" filed February 19, 1999, and United States Patent Application Serial Number 09/311,555, entitled "Method and System for Controlling an Electronic Auction During the Transition to a Closed State" filed May 14, 1999, the disclosures of which are hereby expressly incorporated in the present application.

It is worthy to note that any reference in the specification to "one embodiment" or "an embodiment" means that a particular feature, structure or characteristic described in connection with the embodiment is included in at least one embodiment of the invention. The appearances of the phrase "in one embodiment" in various places in the specification are not necessarily all referring to the same embodiment.

In a supplier-bidding auction or reverse auction, bids, which are often in the form of a price quote, typically start high and move downward over time as bidders interact to establish a closing price. Typically, the auction marketplace is one-sided, with one buyer and many potential suppliers, although multiple-buyer auctions are possible. Typically, products are purchased in the form of components or materials. "Components" may include fabricated tangible pieces or parts that become parts of assemblies of durable products. Example components include gears, bearings, and appliance shelves. "Materials" may include bulk quantities of raw materials that are further transformed into products. Example materials include corn syrup and sheet steel. Services may also be purchased in such a reverse auction.

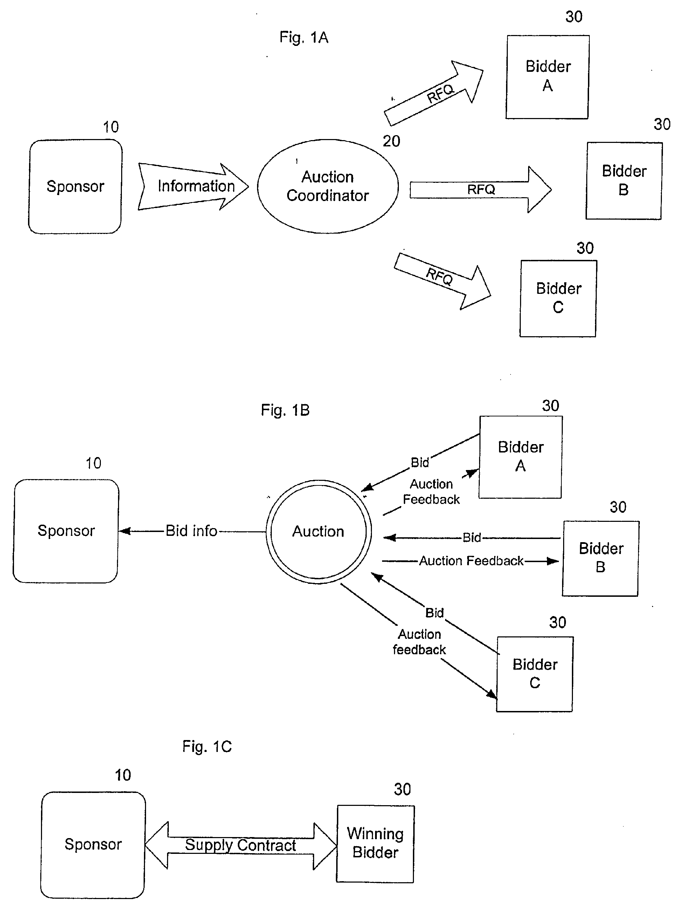

The basic process for a purchaser sponsored supplier-bidding or reverse auction, as conducted by the assignee of the present invention, is described below with reference to Figure 1. Figure 1 illustrates the functional elements and entities involved in setting up and conducting a typical supplier-bidding auction. Figure 1A illustrates the creation of an auctioning event, Figure 1B illustrates the bidding during an auction, and Figure 1C illustrates results after completion of a successful auction.

As will be apparent to one skilled in the art, while the invention is generally described in terms of one buyer and multiple suppliers, the present invention may also be used in other types of electronic markets, such as auctions having multiple potential buyers and sellers, forward auctions having a single seller and multiple potential purchasers, upward-bidding auctions, or electronic exchange marketplaces. The term "sponsor" will be utilized herein to identify the party or parties that originate the auction. In a forward auction, for example, the sponsor would typically be the supplier or seller of one or more goods or services. In such a forward auction, that sponsor might state a good that it desires to sell and receive bids from parties wishing to purchase that good. Those parties wishing to purchase that good would furthermore be "bidders" 30 in such a forward auction.

In a reverse auction example, the sponsor would typically be the purchaser or buyer of one or more goods or services. In such a reverse auction, that sponsor might state a good that it desires to purchase and receive bids from parties wishing to supply that good. Those parties wishing to supply that good would furthermore be "bidders" 30 in such a reverse auction.

In the typical supplier-bidding reverse auction model, the product or service to be purchased is usually defined by the sponsor of the auction. As shown in Figure 1A, when the sponsor 10 decides to use the auctioning system of the present invention to procure products or services, the sponsor 10 provides information to an auction coordinator 20. That information may include information about incumbent suppliers and historic prices paid for the products or services to be auctioned, for example. Typically, the sponsor 10 may also work with the auction coordinator 20 to define the products and services to be purchased in the auction and, if desired, lot the products and services appropriately so that needed products and services can be procured using optimal auction dynamics. A specification may then be prepared for each desired product or service, and a Request for Quotation ("RFQ") generated for the auction.

Next, the auction coordinator 20 typically identifies potential suppliers 30, preferably with input from the sponsor 10, and invites the potential suppliers 30 to participate in the upcoming auction. The suppliers 30 that are selected to participate in the auction become bidders 30 and may be given access to the RFQ, typically through an RFQ in a tangible form, such as on paper or in an electronic format.

As shown in Figure 1B, during a typical auction, bids are made for lots. Bidders 30 may submit actual unit prices for all line items within a lot, however, the competition in an auction is typically based-on the aggregate value bid for all line items within a lot. The aggregate value bid for a lot may, therefore, depend on the level and mix of line item bids and the quantity of goods or services that are offered for each line item. Thus, bidders 30 submitting bids at the line item level may actually be competing on the lot level. During the auction, the sponsor 10 can typically monitor the bidding as it occurs. Bidders 30 may also be given market feedback during the auction so that they may bid competitively.

Feedback about bidding activity and bidder 30 identity, is referred to as "market feedback" and includes any information or data related to the bidders 30 or their bids, interrelationships between those bids, and any other bid related information or data that is received before or during the auction. Market feedback may include, for example, bids that have been placed by other bidders 30, the rank of a participants bid in relation to one or more other bidders 30, the identity of bidders 30, or any subset of that information. Market feedback may also include non-pricing information such as, for example, the quality of the goods to be provided by bidders 30 and shipping costs associated with one or more bidders 30. Providing such market feedback to bidders 30 in an auction helps create real-time competitive interaction among participants in the auction because, without feedback, bidders 30 who are not leading in an auction might not be aware of their relative position and would have less incentive to revise their price quotes and place additional bids to remain competitive. Where market feedback refers to information from an auction that is provided to one or more bidders, it follows that the term "market" refers broadly to all information received in an auction.

After the auction, the auction coordinator 20 may analyze the auction results with the sponsor 10. The sponsor 10 typically conducts final qualification of the low bidding bidder or bidders 30. The sponsor 10 may furthermore retain the right not to award business to a low bidding supplier 30 based on final qualification or other business concerns. As shown in Figure 1C, at least one supply contract is usually drawn up and executed based on the results of the auction.

The auction may be conducted electronically between bidders 30 at their respective remote sites and the auction coordinator 20 at its site. In an alternative embodiment, instead of the auction coordinator 20 managing the auction at its site, the sponsor 10 may perform auction coordinator tasks at its site.

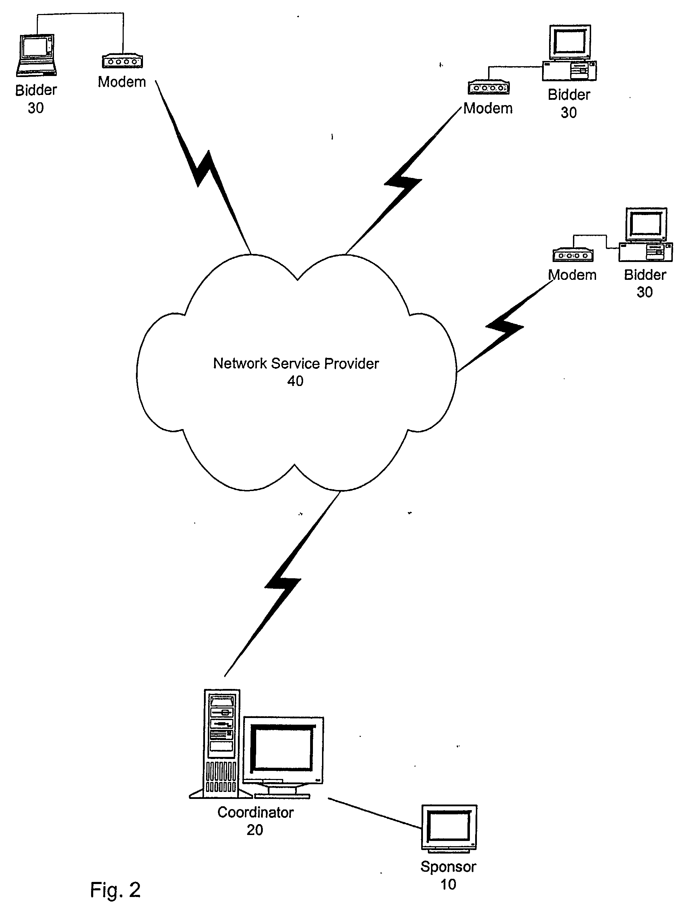

Information may be conveyed between the coordinator 20 and the bidders 30 via any known communications medium. As shown in Figure 2, bidders 30 may be connected to the auction through the Internet via a network service provider 40 accessed, for example, through a dial-up telephone connection. Alternately, sponsors 10 and bidders 30 may be coupled to the auction by communicating directly with the coordinator 20 through a public switched telephone network, a wireless network, or any other known connection method. Other methods of connecting sponsors 10 and bidder 30 and other communications mediums are known to those skilled in the art, and are intended to be included within the scope of the present invention.

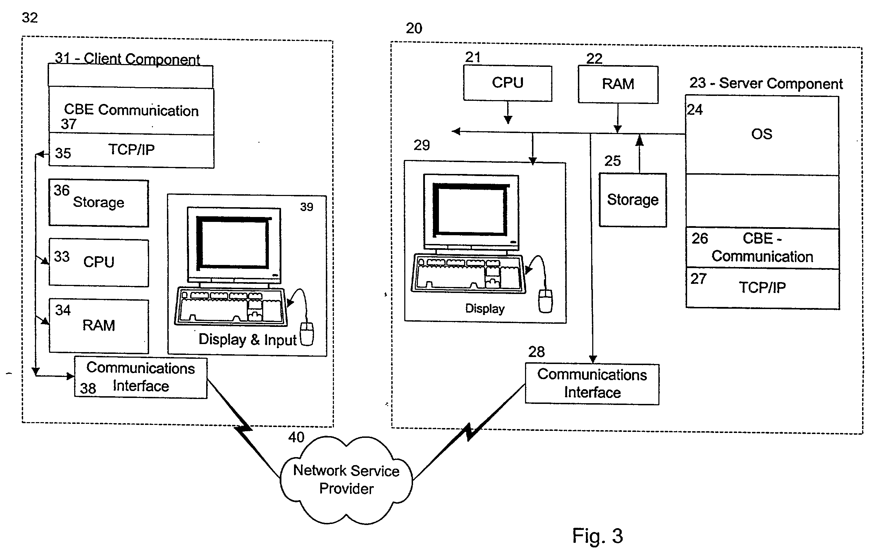

A computer software application may be used to manage the auction. The software application may include two components: a client component 31 and a server component 23. Figure 3 illustrates a server component 23 and a client component 31 resident in host computers in a first embodiment. As may be seen in Figure 3, the server component of that embodiment includes an operating system 24, competitive bidding event or auction communication software 26, and Internet protocol software 27. The server software is hosted on a computer 20 having a processor 21, random access memory 22, and a data storage facility 23. The host computer 20 also includes input and output devices 29 such as, for example a monitor, printer, mouse and keyboard, and a communications interface 28 for communicating with the client component 31. The client component of the embodiment illustrated in Figure 3, includes competitive bidding event communication software 37, and Internet protocol software 35. The client component software is hosted on a computer 32 having a processor 33, random access memory 34, and a data storage facility 36. The host computer 32 also includes input and output devices 39 such as, for example a monitor, printer, mouse and keyboard, and a communications interface 38 for communicating with the server component 23.

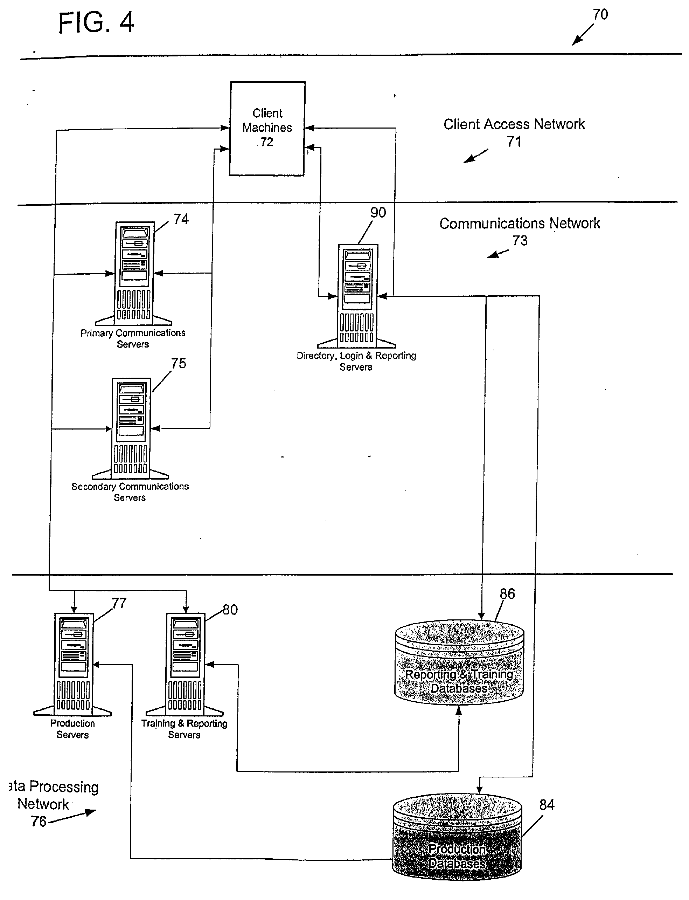

The client component 31 is used by the bidders 30 to make bids during the auction, and to receive and display feedback from the auction. The client component may, for example, be a program that is installed on a bidder's computer, or it may be software that is accessed and run from a Website. Bids can typically only be submitted using the client component of the application, thereby ensuring that sponsors 10 cannot circumvent the bidding process, and that only invited bidders 30 participate in the bidding. Each computer software application may be stored in a data storage device and executed by a processor such as those described in connection with Figure 4 hereinbelow.

Bids are sent over the communications medium to, for example, the auction coordinator, or where the sponsor 10 is performing auction coordination tasks, directly to the sponsor 10. Bids are received by the server component 23. The client component includes software functions for making a connection over the Internet, or other medium, to the server component. Bids are submitted over this connection and feedback is sent to connected bidders 30.

When a bidder 30 submits a bid, that bid is sent to the server component and evaluated to determine whether it is a valid or acceptable bid. Feedback about received bids is seht to connected bidders 30 as is applicable, enabling bidders 30 receiving feedback to see changes in market conditions and plan competitive responses.

The embodiments described herein utilize an online reverse auction, wherein the present invention is performed by a computer processor, as an example in which the present invention may be utilized. In those examples, bidding suppliers 30 bid to supply goods or services to a purchaser 10 and the purchaser 10 typically purchases the goods or services from the lowest priced qualified bidder 30. It is to be understood, however, that the present invention may be used in other applications, would not necessarily have to occur online, and may be performed by other than a computer processor. The present invention may also be utilized in connection with auctions other than reverse auctions. For example, the present invention may be advantageously utilized with forward auctions, wherein the party offering the highest priced qualified bid, rather than the lowest priced qualified bid, is awarded the goods or services being sold. In the case of a forward auction, the "leading bid" is the highest amount offered and the leading bidder 30 is the purchaser party 10 making that highest offer, while in a reverse auction, the "leading bid" is the lowest amount offered and the leading bidder 30 is the bidding party 30 making that lowest bid. Similarly, placing a "better bid" in a reverse auction indicates placing a lower bid, while placing a "better bid" in a forward auction indicates placing a higher bid.

Figure 4 is a diagram illustrating an auction network 70 of the present invention for operating an auction, and into which the server component 23 and client component 31 may be incorporated. The auction network 70 may be divided into three functional sections: a client access network 71, a communications network 73, and a data processing network 76. The client access network 71 may, for example, include one or more client machines 72 for accessing and communicating with the communications network 73. The communications network 73 may include one or more primary communications servers 74, secondary communications servers 75, and directory, login and reporting servers 90. The data processing network 76 may include production servers 77, training and reporting servers 80, reporting and training databases 86, and production databases 84. The production servers 77 and training and reporting servers 80 are referred to collectively herein as bid servers 77 and 80.

The client machines 72 may be, for example, personal computers and may be located at each bidder 30 and purchaser site 10 for accessing the auction. The client machines 72 may access the auction by, for example, connecting to a web site operated by the party hosting the auction. The client machines 72 may also receive software from the communications network 73 that facilitates communications with the communications network 73. Each client machine 72 may have a processor that executes applicable software, and a data storage device that stores applicable software and other auction data.

The primary communications servers 74 are utilized to provide information to bids 58 received from the client machines 72 to the bid servers 77 and 80, and to provide that bid information from the bid servers 77 and 80 to the client machines 72. The primary communications servers 74 may furthermore act as a firewall to prevent direct access to the bid servers 77 and 80 by the client machines. The secondary communications servers 75 act as backups to the primary communications servers 74. The secondary communications servers 75 will perform the communication functions normally performed by the primary communications servers 74 if a failure occurs in the primary communications servers 74, thereby providing redundancy to the auction network 70.

The directory, login, and reporting servers 90 may perform a variety of functions that may be performed by a single server or include separate servers for the various functions. The directory, login, and reporting servers 90 may include a web server that acts as a portal for access to the auction network 70. As such, the directory, login, and reporting servers 90 will receive login requests for access to the auction network 70 via, for example, the Internet. The directory, login, and reporting servers 90 may make access decisions as to whether a client machine 72 is permitted to access the communications network 73. If access is permitted, the directory, login, and reporting servers 90 will direct the client machine 72 to the appropriate portion of the auction network 70. The directory, login, and reporting servers 90, may provide reports to client machines 72. For example, information from prior auctions which may be utilized by purchasers 10 to make a decision as to which bidder 30 will be awarded the sale and to permit the purchaser 10 to consider the way in which the auction proceeded so that future auctions may be refined.

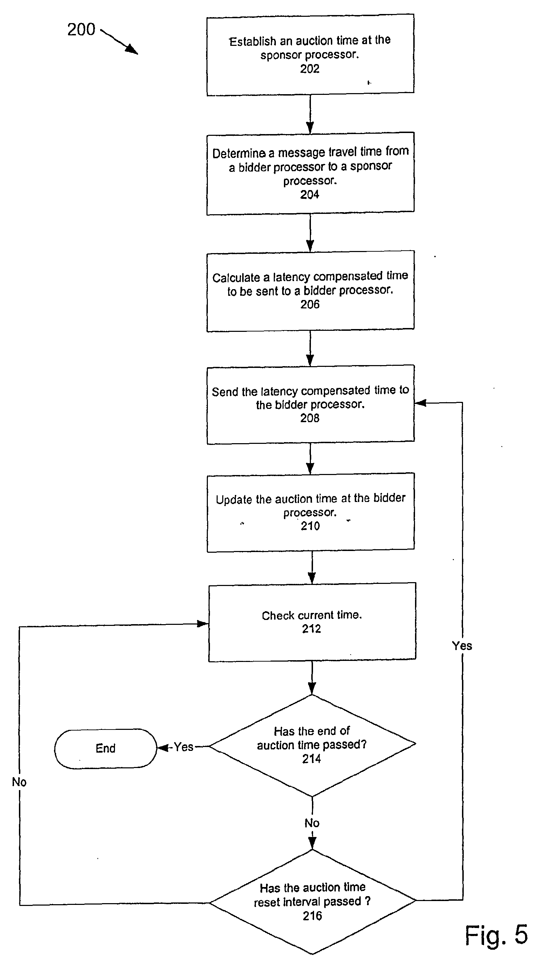

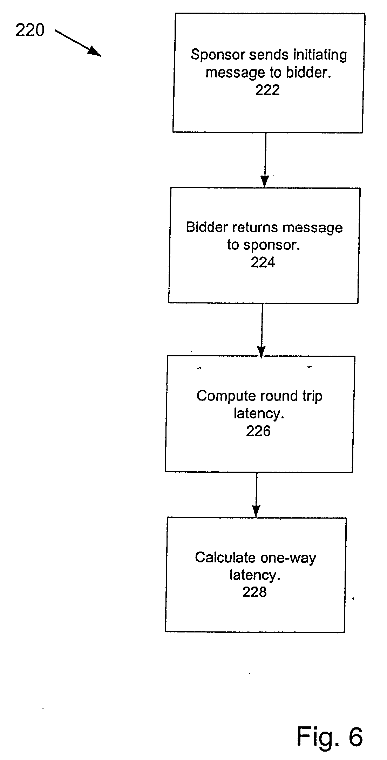

The production servers 77 run the bidding software that facilitates the auction process such as, for example, the software illustrated in Figures 5 and 6. The production servers 77 may communicate with client machines 72 through primary and secondary communications servers 74 and 75. The production servers 77 may also be redundant so that if a failure occurs in the production server 77 that is being utilized in an auction event, the redundant backup production server 77 may perform the functions of the failed production server 77 and, thus, prevent failure of the auction.

The training and reporting servers 80 operate in a manner similar to the production servers 77 and provide reports for auctions. It is useful to operate test auctions to test the operating systems and to train personnel and clients. Such testing may be performed on the production servers 77 or, to prevent any degradation of system operation in actual auctions, one or more separate training servers may be utilized for testing and training. Reporting may also be accomplished on the production servers 77 or the report creation functions may be offloaded to one or more reporting servers 80. The reporting servers 80 may furthermore be combined with the training servers 80.

Each server 74, 75, 77, 80, and 90 may have a processor that executes applicable software, and a data storage device that stores applicable software and data. It should be noted that, although the present invention is described in terms of a server component and a client component, one skilled in the art will understand that the present invention is not limited to a client/server program relationship model, and may be implemented in a peer-to-peer communications model or any other model known to those skilled in the art.

Data related to auctions may furthermore be held in one or more storage devices. The data storage devices may, for example, be a magnetic storage device, a random access memory device (RAM), or a read only memory device (ROM). The data may include pre-auction data, post auction data, and data that is related to active auctions. Pre-auction data may include, for example, bidders 30 that are permitted to bid on a particular auction and the scheduled auction starting and ending times. Post auction data may include the bids and bid times received in a particular auction and reports displaying that data in user friendly formats. Active auction data may include data received from the bidders 30 as the auction is taking place and related data such as the rank of each bidder 30.

An auction may alternately be based on one or more factors other than price, such as quality, delivery factors, and/or other factors that are referred to herein collectively as "total value." Thus, rank may also be based on factors other than price, including total value and any other factor that is useful in an auction setting. A bid or bid amount is a value that is submitted by each participating bidder 30 for comparison to the bids of other bidders 30, and may likewise be based on a variety of bid factors that are considered important to the bid participants. Those factors may include, for example, price, quality, other costs such as delivery costs, or a total value. Bids may also be placed in a number of ways including, for example, absolute total value, or comparative value such as bidding in relation to an index price.

Three databases, or groupings of databases, are incorporated into the auction network illustrated in Figure 4. The production databases 84 hold data that will be used by or is received from the production servers 77, while the reporting and training databases 86 hold data that will be used by or is received from the training and reporting servers 80.

The directory, login, and reporting servers 90 illustrated provide a web portal for the client machines 72. The directory, login, and reporting servers 90 provide an initial contact point for the client machines 72, access to auctions in which the client machine 72 is permitted to participate, and reports relating to active and closed auctions.

One skilled in the art will recognize that certain components of the network described herein, while beneficial to an auction network, are not necessary components in an operational auction network. For example, the secondary communications servers 75 could be removed where the benefit of redundancy is not desired, and the primary communications servers 74 could be removed and the client machines 72 could communicate directly with the bid servers 77 and 80.

The present invention permits a sponsor 10 or an auction coordinator 20 conducting an auction to synchronize an "auction time" at participant processors with an "auction time" at an auction processor over a network. The participant processors are processors used by bidders 30 and/or sponsors 10 and may include the client machines 72 of Figure 4. The auction processor is one or more processor used to coordinate the auction and may include all equipment illustrated in the communications network 73 and data processing network 76 of Figure 4. The "auction time" is a time typically kept by the auction processor and used to determine changes in auction state, including opening and closing times. For example, an auction may be scheduled to open at 1:00 PM auction time, at which time bidding is to begin, and close at 2:00 PM auction time, at which time bidding is scheduled to end. That auction time must, furthermore, be a time that is common to all bidder and auction processors. Participant processors may, for example, be located in time zones that are different than the auction processor and, therefore, may operate on different local times. Those bidders will, therefore, need to operate on auction time, rather than local time, to participate in the auction. Furthermore, because clocks in separate processors operate independently, clocks in various processors will not typically be set to precisely the same time or keep time with equal precision. Bidders, however, must have the clocks in their participant processors synchronized closely with the auction processor so that bidders may submit bids up until the final seconds of the auction without fear that the auction processor will reject those bids due to a lack of synchronization between the processor clocks when bidding ends. Thus, even participant processors that are in the same time zone as the auction processor may need to operate on an auction time that is synchronized to the auction processor. Furthermore, it may be desirable for an auction processor to accept a bid received at the auction processor after an end of bidding time if it can be verified that the bid was placed prior to the end of bidding time. For example, a bidder may place a bid through a participant processor two seconds before the bidding is scheduled to end per the synchronized auction time at the participant processor. Network latency, or the time that it takes for the bid to travel across a network such as, for example, the Internet may, however, be such that it takes ten seconds for the message to be transferred through the network to the auction processor. The bid, therefore, would not be received at the auction processor until eight seconds after the end of bidding time. Thus, a method and system that recognizes when a bid is placed prior to the end of a biddable state but received at the auction processor during a non-biddable state and accepts such a bid is beneficial and is provided in a certain embodiment of the present invention.

A change of state may be initiated by either the auction processor or by one or more of the participant processors. A tension may exist between those approaches in their simplest forms, wherein a change of state initiated by an auction processor beneficially permits an auction to close for all participant processors at the same moment and a change of state initiated by each participant processor permits each participant to place a bid until the moment that a state is to change as viewed at each participant processor. As will be seen, the present invention in its advanced forms may be utilized to permit participants to place bids until the moment that a state is to change as viewed at each participant processor, while causing the change of state to occur at very nearly the same moment for all participant processors.

It should be noted that a change of state from a biddable state to a non-biddable state occurs at an end of bidding time. A transition from a biddable state to a non-biddable state may, for example, be initiated from each participant processor so that the transition of state at each participant processor is effective only for that participant processor. In such an embodiment, each participant processor may check one or more conditions precedent to a state change, such as the auction time being kept locally on the participant processor, on a regular basis and change to a different state when the local auction time reaches a predetermined time. That approach beneficially permits a participant at each participant processor to place a bid until the final moments before a change of state is to occur, as perceived at that participant processor. Because the change of state is based on the local clock at each participant processor, the participant using that processor is able to know precisely when the change of state will occur for him by watching the clock on his local processor. Thus, where auction time is not synchronized precisely between auction and participant processors or where network latency causes a delay in the receipt of a message, each participant will, nonetheless, be permitted to place one or more bids until the change of state is to occur, as perceived by the auction time at each individual participant processor.

Alternately, an auction processor may initiate a change of state. The auction processor may, for example, change from a biddable to a non-biddable state a predefined auction time and effectuate that change by not accepting bids received from participant processors after that time. The auction processor may also change state by sending a message to each participant processor instructing each participant processor to change state. That instruction may, furthermore, take effect immediately upon receipt at each participant processor or may take effect, at a predetermined time after receipt of the instruction at each participant processor.

The predetermined time at which a state change occurs in any of the embodiments described herein may be adjustable. For example, where flexible overtime, such as is described in United States Patent Application Serial Number 09/252,790 and United States Patent Application Serial Number 09/311,555 are utilized, transitions to non-biddable states such as pending or closing may be delayed by receipt of a bid in the final seconds or minutes before the planned transition time.

It may also be beneficial for an acknowledgement to be sent from a participant processor to the auction processor confirming that the participant processor has changed state. Thus, when a participant processor makes a decision to change state, that processor may send an acknowledgement to the auction processor confirming that that processor has changed state. Similarly, when an auction processor instructs a participant processor to change state, that processor may send an acknowledgement to the auction processor confirming that the participant processor has changed state as instructed. The acknowledgement may be utilized for a variety of purposes including informing the auction processor that each participant processor has properly changed state and, thereby, confirming that each participant processor has acted as expected. The acknowledgements may cause an auction to change state, for example, from pending to closed, when each participant processor has acknowledged that it has terminated bidding. Alternately, acknowledgements may be directed to an operator who uses the acknowledgement information to make decisions such as an auction closing decision. The auction processor may also send a message to the participant processors acknowledging that the auction processor has changed the state of the auction.

It may also be desirable for an auction processor to accept a bid placed by a participant processor after an end of bidding time as perceived at the auction processor as long as the bid was placed prior to end of bidding time as perceived at the participant processor. The present invention, therefore, also discloses methods and systems that allow an auction processor to accept one or more bids after the auction processor transitions to a non-biddable state if those bids were sent before a legitimate client perceived non-biddable state occurred. Thus, for example, when a change from a biddable state to a non-biddable state is initiated by a participant processor, the auction processor may accept a bid placed from a participant processor prior to the change to the non-biddable state at the participant processor even if the auction processor perceives that the non-biddable state occurred prior to a time when the bid was received by the auction processor. Similarly, the auction processor may accept a bid placed from a participant processor prior to the change to the non-biddable state at the participant processor even if the auction processor perceives that the non-biddable state occurred prior to a time when the bid was sent by the auction processor.

The present invention may, for example, be executed on the auction network 70 described in connection with Figure 4, or may be operated in association with other known mechanisms. The auction processor may include the devices comprising the communications network 73 and data processing network 76 of Figure 4. A participant processor may comprise the client machine 72 of Figure 4 and each bidder may participate in the auction by using a participant processor. A sponsor may also participate in an auction through a participant processor in an embodiment where a sponsor is, for example, connected to an auction processor operated by a third party such as an auction coordinator 20. Alternately, a sponsor may utilize an auction processor where, for example, the sponsor 10 is operating its own auction.

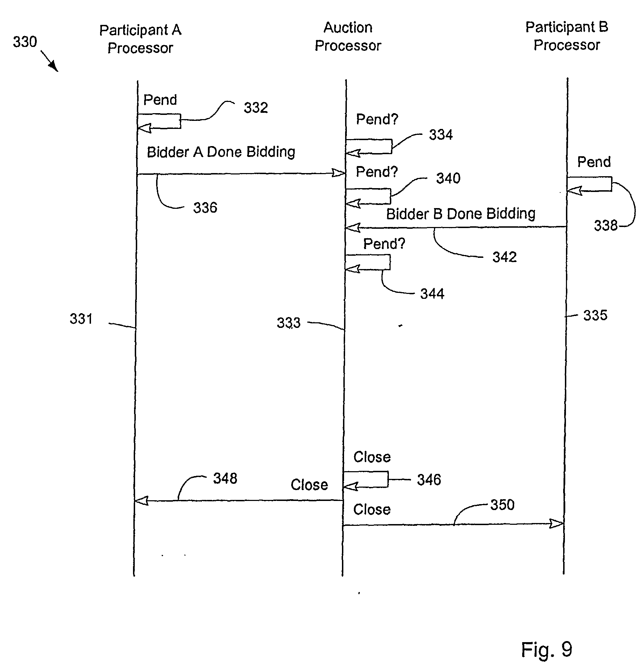

The present invention may include two components. The first component is described in connection with Figures 5-8 and is directed primarily to synchronizing auction time at each participant processor with auction time at the auction processor. The second component is described in connection with Figures 9-12 and is directed primarily to accepting bids at the auction processor that are submitted from the participant processors prior to an end of bidding time. Time Synchronization

Figure 5 illustrates a method of synchronizing auction time 200, wherein the auction processor sets a clock at each participant processor so that each participant processor matches the auction time at the auction processor and is compensated for network latency. In that embodiment 200, the auction processor establishes an auction time at the auction processor at 202 by, for example, reading the current time from a clock coupled to the processor. At 204, the auction processor determines the network latency, or time required for a message to travel across the network. Once the auction time and network latency are established, the auction processor performs a calculation at 206 to determine a time that should be sent to the participant processor, to set the auction time at the participant processor while compensating for network latency. At 208, the latency compensated auction time is sent to the participant processor and at 210, that auction time is utilized to update an auction time at the participant processor. The auction processor checks its clock to determine the current time at 212. At 214, the auction processor determines whether the end of bidding time has passed. If the closing time has passed, the auction processor stops updating auction time. If the closing time has not passed, the auction processor will determine whether an auction update interval time has elapsed at 216. If the auction update interval time has elapsed, the process will return to 208 to again update the auction time at the participant processor.

Alternately, if the auction update interval time has elapsed, the auction processor may return to 204 or another step in the process flow to recalculate latency time and then update the auction time at the participant processor. As will be recognized, a plurality of bidders typically participate in an auction, therefore, the method of synchronizing the closing of a network auction 200 will typically be utilized to synchronize auction time for each bidder participating in an auction.

Figure 6 illustrates a method of determining network latency 220. At 222, the auction processor sends an initiating message to the participant processor. That initiating message requests that the participant processor immediately return a message to the auction processor. At 224, the return message is sent to the auction processor. At 226, the auction processor will compute the "round trip latency time" which is equal to the difference between the time that the initiating message was sent from the auction processor and the time that the return message was received at the auction processor. Because the time required to send a message from a first place in a network to a second place in a network is typically very similar to the time that it takes to send a message back from the second place to the first place, network latency from the auction processor to the participant processor and network latency from the participant processor to the auction processor may be assumed to be half of the round trip latency time. Thus, at 228, a "one-way latency time," which is also referred to hereinafter as the "latency time" for a message to travel from the auction processor to the participant process'or or from the participant processor to the auction processor is calculated by dividing the round trip latency time by two.

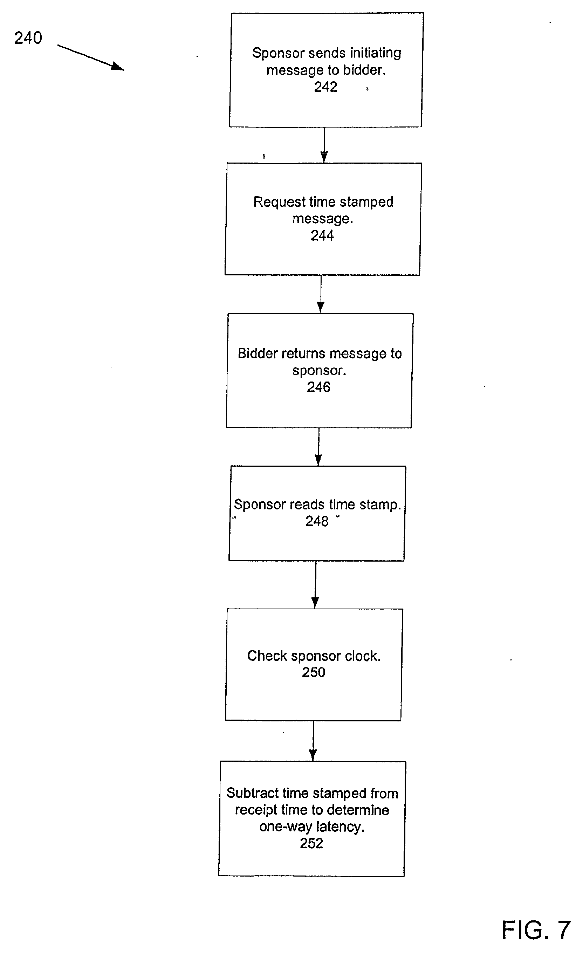

Figure 7 illustrates an alternate method of determining network latency 240 that relies on a presumption that the time clocks at the bidder and auction processors are set at the same time. At 242, the auction processor sends an initiating message to the participant processor. That initiating message requests that the participant processor return a "time stamped" message to the auction processor at 244. The term "time stamp" indicates that the time the message is sent, as determined by reference to the sending processor clock, is included in the message when sent. At 246, the return message is sent to the auction processor. Thus, the auction processor will read the time stamp on the message when the message is received at 248. The auction processor will also check the time at its own coupled clock at 250. At 252, the auction processor will subtract the time stamped and received at 248 from the receipt time read at 250 to determine one-way latency time from the participant processor to the auction processor.

Network latency encountered in, for example, the Internet, may be caused by such factors as the number and size of messages traveling (commonly referred to as an amount of "traffic" or "activity") on the network, the distance the message must travel, the number of routers through which the message must pass and the level of functionality of those routers, the network bandwidth, and the number of lines that are available as opposed to being busy or out of operation. Moreover, the factors affecting network latency vary continually. Thus, network latency varies from the time one message is sent to the time another message is sent. Network latency often, however, is fairly stable over periods of time, such as the length of a typical auction. Therefore, depending on the accuracy desired, latency may be calculated by, for example, a single test as described in reference to Figures 6 and 7, an average of several tests, a highest or lowest latency determined from a number of latency tests, or a running average that averages only a certain number of most recent tests. Network latency may also be estimated by reference to average statistics for a region at, for example, a network dashboard internet site. Network latency may furthermore be calculated individually for each participant processor, or may be a single amount applied to a group of, or all participant processors.

Referring again to Figure 5, after the one-way latency time has been established, the auction processor will update auction time at the participant processor, taking into account the one-way latency time, at 206. Because the one-way latency time is the amount of time required to send a message to the participant processor from the auction processor, in a certain embodiment, the auction time sent to the participant processor may be calculated by adding the one-way latency time to the auction time at the time the auction time message is sent.

Alternately, the auction time sent to a bidder may be equal to the auction processor auction time plus the one-way latency time plus a buffer time. The buffer time may furthermore be, for example, a fixed value or a percentage of the one-way latency time. The buffer time may be added to the bidder auction time to assure that a bid placed by the bidder from the participant processor prior to the end of bidding time at the participant processor is accepted by the auction processor even if the latency time for that particular message is greater than the previously determined one-way latency time.

Yet another option that may be used when compensating for network latency is to add the round trip latency to the auction processor auction time. Where it is desired to change the state in an auction at a predetermined time without waiting for late messages to be received, it may be desirable to add the round trip latency time to the auction time. When round trip latency is added to auction time, one half of the round trip latency time is used in sending the time synchronization message to the participant processor. Thus, each participant processor will be set at a time that is later than the time set at the auction processor by an amount equal to the one-way latency time. The other half of the round trip latency time is left to compensate for the latency time that will be experienced when sending a bid message or other message to the auction processor. The open bidding period will, therefore, end at each participant processor at a time equal to the one-way latency time prior to the end of the open bidding period at the auction processor. That early end to bidding may be, for example, the same amount of time for each participant and be equal to the longest one-way latency time experienced by any participant. Alternately, that early end to bidding may, for example, be calculated separately for each participant. Thus, by adding round trip latency time to the auction time sent to each participant processor clock in the synchronization message, each participant processor clock is offset to allow a message sent just prior to the end of the open bidding period (per the participant processor clock) to be received at the auction processor prior to the end of the open bidding period (per the auction processor clock).

The auction time may furthermore be updated at the participant processor at regular or random intervals, such as, for example, one-minute intervals, during the auction. In that way, clocks in various processors that operate at different rates and varying levels of accuracy will be resynchronized regularly. Thus, variations in clock timing will have a minimal effect on synchronization between processors because only a short interval, during which the timing may vary, elapses between synchronization updates. Furthermore, regular resynchronization minimizes the danger that a bidder will reset its auction time maliciously to enable that bidder to place a bid after the end of bidding time. Such malicious interference is minimized because it must occur during the short period between a possibly random last synchronization and a closing time.

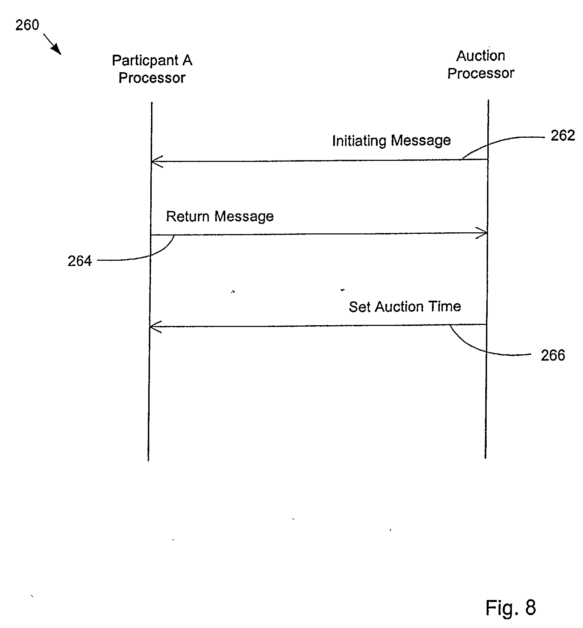

Figure 8 is a time line 260 illustrating the passage of latency calculation messages between an auction processor and a participant processor. The time line of Figure 8 and the other time lines included herein begin at an early time at the top of the chart and end at a later time at the bottom of the chart. At 262, the auction processor sends an initiating message. At 264, the participant processor returns a message to the auction processor. At 266, the auction processor sends a message to the participant processor that updates auction time at the participant processor with a latency-compensated auction time.

It should be understood that auctions typically have changes of state that are based on time. For example, an auction may include an available state during which auction parameters are set and may be viewed by participants. Bids may often be prepared during the available state but are not accepted if submitted during the available state. The available state may be followed by an open state that begins at the auction opening time. Bids are typically accepted during the open state. The auction also typically has an end of bidding time, after which bids are no longer accepted. Thus, at the end of bidding time, the state may revert to a closed state or, as in the present example, a pending state that is followed by a closed state. In the pending state, bids placed after the closing time are not accepted by the auction processor, but bids that were sent prior to the closing and received after the closing or, in certain situations, bids that were sent at a time at which a bidder reasonably perceived the auction to be open, may be accepted. One or more bids or other changes to the market may also be accepted during the pending period for many other reasons including, for example, where participant processor connection problems occur. Where a pending state is utilized, the auction will transition to a closed state after, for example, a predetermined time period has elapsed, or after each bidder has been contacted and all final bids have been confirmed.

Other states may also exist, including an overtime state, an extended state, and a paused state. The overtime state is much like an open state and is utilized primarily to extend the bidding time past the scheduled end of bidding time. Overtime states are often used in situations wherein a bid is placed prior to, but near the time that the bidding is scheduled to end. In such a case, an overtime state may be utilized to permit time for other bidders to respond to the late bid with bids of their own.

The extended state is utilized primarily in situations wherein multiple lots of goods or services are being auctioned simultaneously. In such a situation, bidding for each lot is often scheduled to end at staggered times so that bidders need only focus on the closing of a single lot at any time. Therefore, when the biddable period for one lot is extended, for example due to overtime, the biddable period for each lot scheduled to close subsequently may be extended by the amount of the overtime period.

A paused state is utilized to stop an auction during any state and hold the auction changeless throughout the paused state to, for example, correct an error or technical problem that has occurred. Open, overtime, and extended states may be referred to as biddable states because bids may be placed and accepted during those states, whereas the other states may be referred to as non-biddable states because bids may not be placed and accepted during those states. Thus, it will be recognized that whereas the examples described herein may utilize time as the primary factor in determining whether to accept a bid, alternate variations on the present invention may use state, in addition to or instead of time, to determine whether a bid should be accepted or rejected.

Synchronizing auction time at all participant processors, as described above, creates a fair auction marketplace from which each bidder is able to know the state of the auction and precisely when bidding will end in the auction. Another concern related to on-line auctions, however, is whether and how to accept a bid that is sent prior to the end of bidding time but which is received at the auction processor after the end of bidding time. Certain precautions may be taken to warn a bidder that time to end of bidding is short, including causing the bidder viewing screen, or a portion thereof, to begin flashing at a predetermined time, such as sixty seconds, prior to closing. Furthermore the participant processor may disable the ability to submit a bid after the bidding time has ended. Those precautions, however, do not solve the problem of accepting a bid at the auction processor after closing, when that bid was submitted prior to the end of the bidding time.

### Auction Processor Initiates Changes of State

Figure 9 is an auction time line 330 that illustrates interaction between an auction processor represented by the center vertical line 333, a first participant processor labeled "Participant A Processor" and represented by the left vertical line 331, and a second participant processor labeled "Participant B Processor" and represented by the left vertical line 335. Horizontal lines that extend from a processor and return to the same processor indicate internal decision making steps, while lines extending from one processor to another indicate messages sent therebetween. The arrows indicate the direction that information is flowing. The auction time line 330 of Figure 9 begins just prior to the closing of the depicted auction.

Figures 9-12 will be utilized in this section to describe an embodiment of the present invention in which the Auction Processor 333 initiates changes in states to pending and closing states. At 332, Participant A Processor 331 reaches the end of bidding time and changes state to pending. At that time, Participant A Processor 331 may disable the ability to submit a bid from that processor. At 334, the Auction Processor 333 makes an internal decision as to whether the auction should change state from open to pending at that time. That decision may, for example, be based on the receipt of a message from each participating bidder informing the Auction Processor 333 that each Participant Processor 331 and 335 has entered the pending state, it may be based on the recognition by the Auction Processor 333 that the end of bidding time has been reached, or it may be based on a combination of the Auction Processor 333 and the Participant Processors 331 and 335 recognizing that the end of bidding time has been reached.

In this embodiment, wherein the end of bidding state is initiated solely by the Auction Processor 333, the recognition that the end of bidding time has been reached may occur when the auction time at the Auction Processor 333 reaches a predetermined pending time. As has previously been discussed, the moment that the Auction Processor 333 reaches the pending time may not occur simultaneously with recognition by the Participant Processors 331 and 335 of the end of bidding time. Thus, because it is difficult to exactly synchronize time in multiple processors, certain participant processors may recognize an end of bidding time prior to recognition by the Auction Processor 333 and certain participant processors may recognize an end of bidding time after recognition by the Auction Processor 333. If auction time is synchronized as described herein, however, the end of bidding time will normally be recognized by all participant processors at very nearly the same time.

In this example, wherein the Auction Processor 333 is responsible for determining the transition to the pending state, the auction clock at the Auction Processor 333 has not reached the predetermined time to transition into the pending state at 334. At 336, Participant A Processor 331 sends such a message, labeled "Bidder A Done Bidding" on the Figure, to the Auction Processor 333 indicating that no more bids will be submitted from that processor 331. At 338, Participant B Processor 335 reaches the end of bidding time and changes state to pending.

At 340, the Auction Processor 333 reads auction time from the auction clock at Auction Processor 333 and determines that the predetermined time to switch to pending has occurred. Therefore, the Auction Processor 333 changes to the pending state at the time indicated by 340.

At 342, Participant B Processor 335 sends a message, labeled "Bidder B Done Bidding," to the Auction Processor 333 indicating that no more bids will be submitted from that processor 335. At 344, the Auction Processor 333 may again determine whether the auction should change to the end of bidding state. The Auction Processor 333 has, however, already transitioned to pending and so need not perform the pending check at 344, nor check further for a pending time transition.

After the auction has pended, the Auction Processor 333 will permit an operator to confirm that all bids have been properly recorded by the Auction Processor 333. At 346, the Auction Processor 333 ends bidding in the auction after that all bids have been properly recorded. The Auction Processor 333 furthermore broadcasts to all participating Participant Processors 331 and 335 that the auction has closed, as shown at 348 and 350. That broadcast may simply be for the purpose of confirmation or may cause the participant processors 331 and 335 to transition to a closed state.

In the previous example, the Bidder A Done Bidding message at 336 was received prior to the Auction Processor 333 transitioning to the pending state and the Bidder B Done Bidding message at 342 was received after the Auction Processor 333 transitioned to the pending state. It will be recognized that both the Bidder A Done Bidding messagd at 336 and the Bidder B Done Bidding message at 342 may alternately have been submitted prior to or after the pending or end of bidding time as perceived at the Auction Processor 333 by reference to the auction processor clock. In any of those cases, however, the auction end of bidding time is determined by the Auction Processor 333 when the auction processor clock reaches the pending time and bidding will end at that time in the auction of this embodiment. Thus, the bidding ends in the auction when the Auction Processor 333 has reached the end of bidding time regardless of the status of the participant processors 331 and 335.

The Auction Processor 333 may, furthermore, enter a pending state at the earliest of steps 334, 340, and 344 after which the pending time occurs at the Auction Processor 333. The Auction Processor 333 may alternately change directly to a closed state when the bidding time ends, rather than pending and waiting until a later time to close.

In the present embodiment, the Auction Processor 333 changes state from pending to closed at 346 and sends acknowledgement messages to each participant processor 331 and 335 at 348 and 350 confirming the change of state to closed. It will be recognized that the Auction Processor 333 may utilize conditions other than or in addition to auction time in its determination of when to change state. For example, receipt of an acknowledgement from each participant processor 331 and 335 may be required prior to changing to the closed state or such acknowledgement in addition to the passing of a particular auction time may be required prior to changing to the closed state.

In an embodiment wherein the Auction Processor 333 enters a pending state prior to closing, the pending state may include a period during which an auction coordinator 10 confirms that all bids were properly handled by, for example, contacting each bidder 30 to confirm their final bids and bid times. In that embodiment, the Auction Processor 333 may enter the closed state after such confirmation takes place and any errors have been corrected. Alternately, the closed state may be initiated after, for example, the passage of a certain amount of time after a specific event such as the initiation of the pending state or the receipt of Done Bidding messages from all or some participant processors.

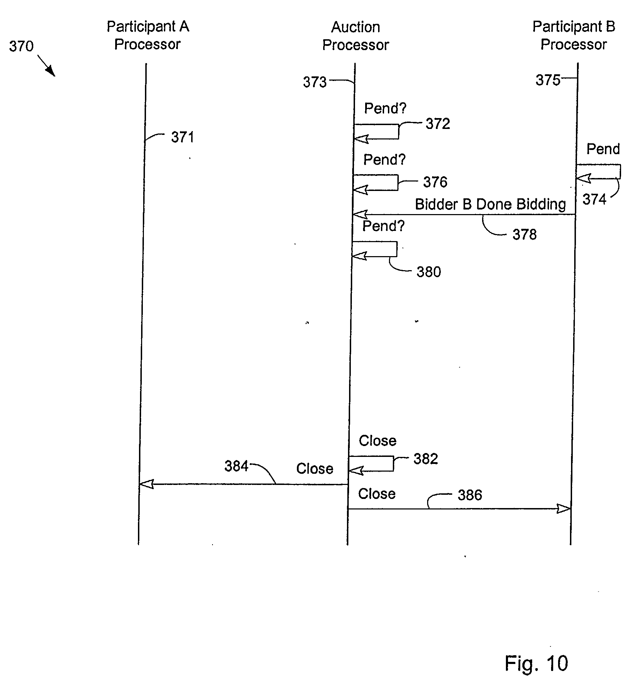

Figure 10 is another auction time line 370 that illustrates an embodiment of the present invention in which the Auction Processor 333 initiates changes in states, and in which a participant processor is non-responsive. In auction time line 370, an Auction Processor is represented by the center vertical line 373, a first participant processor labeled "Participant A Processor" is represented by the left vertical line 371, and a second participant processor labeled "Participant B Processor" is represented by the left vertical line 375. It may be noted by reference to Figure 10, that no messages are sent to the Auction Processor 373 from Participant A Processor 371 during the auction segment illustrated. At any of 372, 376, or 380 the Auction Processor 373 may determine whether the conditions for initiating the pending state have been met. In this embodiment, like that described previously in connection with Figure 9, the pending state is initiated by the Auction Processor 373 when the clock at the Auction Processor 373 reaches the predetermined pending time. As was illustrated in Figure 9, Participant Processor B reaches a pending state at 374 and acknowledges that state at 378. The Auction Processor 373 initiates the pending state when pending time is reached on the auction processor clock regardless of whether any the clocks at the Participant Processors 371 and 375 have reached the time at which they are to enter the pending state. In the example illustrated, the Auction Processor 371 waits for a period of time after pending for receipt of an acknowledgement from Participant A Processor and, for example, after passage of a predetermined period of time or after operator intervention in response to recognition that Participant A Processor is not responding, closes the auction at 382. The time period that the Auction Processor 373 waits for acknowledgement from each Participant A Processor 371 and 375 may, for example, be 30 seconds from the scheduled end of bidding time as perceived at the auction processor clock. At 382, the time period has elapsed and the pending period has ended, thus, the Auction Processor 373 ends bidding in the auction. The Auction Processor 373 then broadcasts that the auction has closed to all participating bidders, as shown at 384 and 386.

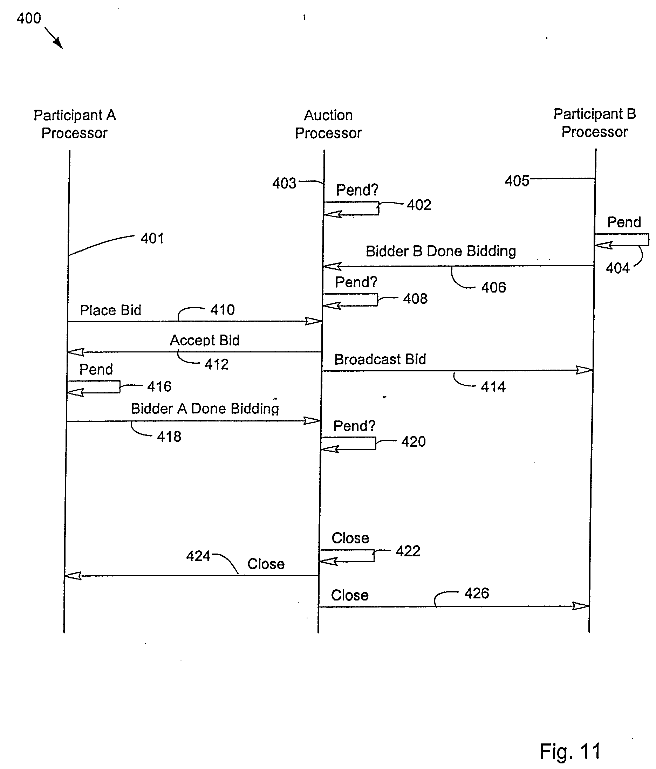

Figure 11 is another auction time line 400 that illustrates an embodiment of the present invention in which the Auction Processor 333 initiates changes in states wherein a late bid is submitted and accepted, but does not trigger overtime bidding. Overtime bidding refers to a system wherein a bid placed late in an auction will trigger the auction to stay open for an additional amount of time after that bid is placed and after the scheduled end of the auction. In auction time line 400, an auction processor is represented by the center vertical line 403, a first participant processor labeled "Participant A Processor" is represented by the left vertical line 401, and a second participant processor labeled "Participant B Processor" is represented by the left vertical line 405. The auction time line 400 begins just prior to the closing of the depicted auction. At 402, the Auction Processor 403 makes an internal decision as to whether bidding should end in the auction at that time. The Auction Processor 403 determines that bidding should not end at 402 because, for example, pending time has not yet occurred at the auction processor clock. Participant B Processor 405 reaches its end of bidding time and changes state to pending at 404. At that time, Participant B Processor 405 disables the ability to submit a bid from that processor 405 in this embodiment. At 406, Participant A Processor 401 sends a message to the Auction Processor 403 indicating that no more bids will be submitted from that processor 401. The Auction Processor 403 again determines whether bidding should end in the auction at 408 and determines that bidding should not end because pending time has not yet occurred at the Auction Processor 403. At 410, Participant A Processor 401 submits a bid to the Auction Processor 403. The Auction Processor 403 accepts the bid and confirms that acceptance by way of a message sent to Participant A Processor at 412. At 414, the newly accepted bid is broadcast to the other Participant Processors 405. Participant A Processor 401 changes to the pending state at 416 and sends a confirming message to that effect at 418. At 420, the Auction Processor 403 checks the auction processor clock to determine whether pending time has occurred and enters the pending state because the time to enter the pending state has passed at the Auction Processor 403. At 422, the Auction Processor 403 closes the auction, and at 424 and 426 the Auction Processor informs the participating participant processors 401 and 405 that the auction is closed.

In the auction scenario described in connection with time line 400, Bidder A submitted a bid from Participant A Processor 401 after Participant B Processor 405 converted to the pending state such that Bidder B, the user of Participant B Processor 405, was unable to respond to that bid with a bid of its own. In time line 400, that late bid may have been accepted without allowing Bidder B an opportunity to respond with another bid of its own because, for example, the bid placed by Bidder A may not have bettered or, in the case of a reverse auction, been lower than the lowest bid placed by Bidder B. Thus, in that example, Bidder B may be awarded a contract stemming from the auction even though Bidder B was unable to respond to the last bid placed by Bidder A. In certain other circumstances, however, it is desirable to hold the auction open after the scheduled closing time, which is known as overtime, to permit bidders an opportunity to place additional bids after they have entered the pending state.

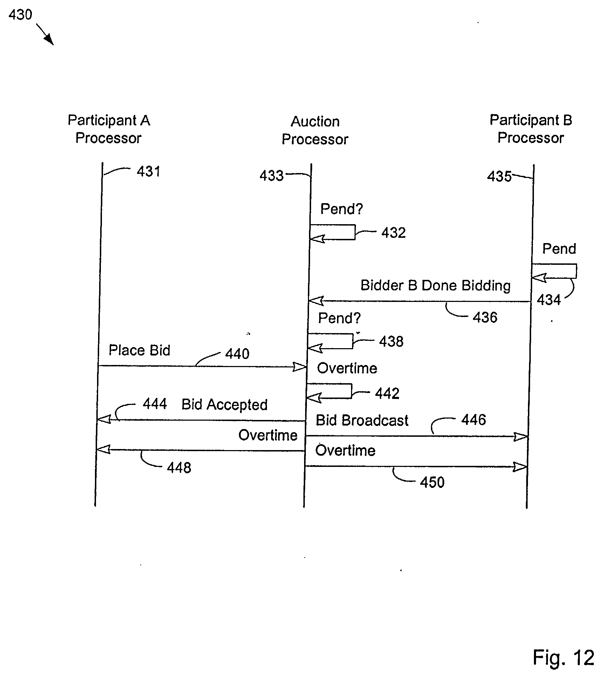

Figure 12 is another auction time line 400 that illustrates an embodiment of the present invention in which the Auction Processor 433 initiates changes in states wherein a participant processor is permitted to change state from pending back to open to provide an opportunity for a bidder utilizing that processor to respond to a late bid submitted by another bidder. In time line 430, an Auction Processor 433 is represented by the center vertical line 433, a first participant processor labeled "Participant A Processor" is represented by the left vertical line 431, and a second participant processor labeled "Participant B Processor" is represented by the left vertical line 435. In time line 430, the Auction Processor 433 determines as previously described whether to place the auction in a pending state at 432. At that time, the Auction Processor 433 allows the auction to remain open because the predetermined pending time has not occurred at the auction processor clock. At 434, Participant B Processor 435 switches to a pending state such that Bidder B, the user of Participant B Processor 435, may not submit bids at that time. At 436, Participant B Processor 435 sends a message to the Auction Processor 433 informing the Auction Processor 433 that Participant B Processor 435 is pending. At 438, the Auction Processor 433 recognizes that the auction time at the Auction Processor 433 has not yet passed and that it has received a pending confirmation from Participant B Processor 435 but has not received a pending confirmation from Participant A Processor 431. The Auction Processor 433 permits the auction to remain in the open state because pending time has not yet occurred at the Auction Processor 433. Participant A Processor 431 submits a new bid at 440, after Participant B Processor 435 has changed to the pending state. The Auction Processor 433 determines that the bid placed at 440 should be accepted because the pending time has not occurred at the Auction Processor 433. At 442, the Auction Processor 433 determines that all bidders are to receive an additional open period, or overtime period, during which they may respond to the bid received at 440. The Auction Processor 433 also sends a message to Participant A Processor 431 at 444, indicating acceptance of the bid placed at 440. The bid placed at 440 is broadcast to all other bidders at 446, and overtime notification is sent to all bidders at 448 and 450. That overtime notification will enable Participant A Processor 431 to return to the open state so that each bidder may respond by placing a bid of their own. Of course, steps 442 through 450 may be performed in varying order. Furthermore, multiple overtimes may occur in an auction, in response to bids placed during overtime periods.

### Participant Processors Initiate Changes of State

Figures 9-12 will be utilized to describe another embodiment wherein the participant processors initiate changes of state to pending or closed states. Figure 9 is an auction time line 330 that illustrates interaction between an auction processor represented by the center vertical line 333, a first participant processor labeled "Participant A Processor" and represented by the left vertical line 331, and a second participant processor labeled "Participant B Processor" and represented by the left vertical line 335. Horizontal lines that extend from a processor and return to the same processor indicate internal decision making steps, while lines extending from one processor to another indicate messages sent therebetween. The arrows indicate the direction that information is flowing. The auction time line 330 of Figure 9 begins just prior to the closing of the depicted auction. At 332, Participant A Processor 331 reaches the end of bidding time and changes state to pending. At that time, Participant A Processor 331 may disable the ability to submit a bid from that processor. At 334, the Auction Processor 333 makes an internal decision as to whether the auction should change state from open to an end of bidding state at that time. That decision may, for example, be based on the receipt of a message from each participating bidder informing the Auction Processor 333 that each Participant Processor has entered the pending state. That decision may furthermore be made at regular intervals and may be performed throughout the auction, when the auction is approaching the closing time, or after the end of bidding time, as read at the Auction Processor 333. Because the Auction Processor 333 has not received messages confirming that either Participant A Processor 331 or Participant B Processor 335 has entered the pending state, the Auction Processor 333 permits the auction to remain open. At 336, Participant A Processor 331 sends such a message, labeled "Bidder A Done Bidding," to the Auction Processor 333 indicating that no more bids will be submitted from that processor 331. At 338, Participant B Processor 335 reaches the end of bidding time and changes state to pending. It should be noted that, even when time synchronization is utilized, Participant Processor clocks typically vary by small amounts. Thus, participant processors will recognize that bidding in an auction has ended very nearly the same time, but not simultaneously.

The Auction Processor 333 again determines whether the auction state should be changed at 340. Although both Participant Processors 331 and 335 have entered the pending state, the Auction Processor 333 has only received a confirming message to that effect from Participant A Processor 331. Thus, the Auction Processor 333 again permits the auction to remain open. At 342, Participant B Processor 335 sends a message, labeled "Bidder B Done Bidding," to the Auction Processor 333 indicating that no more bids will be submitted from that processor 335. At 344, the Auction Processor 333 again determines whether the auction should change to the end of bidding state, and determines, at that time, that it is appropriate to change'the state to pending because pending state confirmation messages have been received from each of the two participating Participant Processors 331 and 335. At 346, the Auction Processor 333 ends bidding in the auction. The Auction Processor 333 furthermore broadcasts to all participating Participant Processors 331 and 335 that the auction has closed, as shown at 348 and 350.

In the preceding example, only two bidders participated in the auction. Therefore, after the Auction Processor 333 received a message from each of the Participant Processors 331 and 335 confirming that they had entered the pending state, the Auction Processor 333 ended bidding in the auction. As will be readily recognized, however, when more than two bidders are participating in an auction, the Auction Processor 333 will typically wait until it has received a message from each participant processor confirming that each has entered the pending state before ending bidding in the auction.

Furthermore, it is noted that the Bidder A Done Bidding message at 336 and the Bidder B Done Bidding message at 342 may have been submitted prior to or after the closing time as perceived at the Auction Processor 333 by reference to the auction processor clock. Thus, whether the auction processor clock has passed the auction end of bidding time is not determinative of when bidding will end in the auction. Rather, the bidding ends in the auction when each of the participating bidders processors confirm that they have reached the end of bidding time.

The Auction Processor 333 may, furthermore, enter a pending state of its own after it receives pending state confirmation from each participant processor, or change directly to a closed state. In an embodiment wherein the Auction Processor 333 enters a pending state prior to closing, the pending state may include a period during which an auction coordinator 10 confirms that all bids were properly handled by, for example, contacting each bidder 30 to confirm their final bids and bid times. In that embodiment, the Auction Processor 333 may enter the closed state after such confirmation takes place and any errors have been corrected.

Figure 10 is another auction time line 370 that illustrates an auction in which a participant processor is non-responsive. In auction time line 370, an auction processor is represented by the center vertical line 373, a first participant processor labeled "Participant A Processor" is represented by the left vertical line 371, and a second participant processor labeled "Participant B Processor" is represented by the left vertical line 375. It may be noted by reference to Figure 10, that no messages are sent to the Auction Processor 373 from Participant A Processor 371 during the auction segment illustrated. At 372, the Auction Processor 373 determines whether it has received pending state confirmation and recognizes that it has not received pending confirmation from either participating Participant Processor 371 or 375. Participant B Processor 375 changes to pending state at 374. At 376, the Auction Processor 373 performs another of its regular pending state confirmation checks and recognizes that it has still not received pending confirmation from either participating Participant Processor 371 or 375. Participant B Processor 375 confirms that it has entered the pending state at 378 by sending a confirmation message to the Auction Processor 373. When the Auction Processor 373 next checks participant processor pending states at 380, the Auction Processor 373 recognizes that it has received pending confirmation from Participant B Processor 375 but not Participant A Processor 371. Therefore, the Auction Processor 373 permits the auction to remain open while awaiting pending confirmation from the other bidder in this example. In this embodiment, however, the Auction Processor 373 does not permit the auction to remain open indefinitely. Rather, the Auction Processor 373 will permit a time period to elapse from the time at which bidding is scheduled to end and, if it has not yet received pending confirmation from each participating participant processor, the Auction Processor 373 will end bidding in the auction after the time period has expired. That time period may, for example, be 30 seconds from the scheduled end of bidding time as perceived at the Auction Processor 373 clock. At 382, the time period has elapsed and the pending period has ended, thus, the Auction Processor 373 ends bidding in the auction. The Auction Processor 373 then broadcasts that the auction has closed to all participating bidders, as shown at 384 and 386.

Figure 11 is another auction time line 400 that illustrates a bidding scenario wherein a late bid is submitted and accepted, but does not trigger overtime bidding. Overtime bidding refers to a system wherein a bid placed late in an auction will trigger the auction to stay open for an additional amount of time after that bid is placed and after the scheduled end of the auction. In auction time line 400, an auction processor is represented by the center vertical line 403, a first participant processor labeled "Participant A Processor" is represented by the left vertical line 401, and a second participant processor labeled "Participant B Processor" is represented by the left vertical line 405. The auction time line 400 also begins just prior to the closing of the depicted auction. At 402, the Auction Processor 403 makes an internal decision as to whether bidding should end in the auction at that time. The Auction Processor 403 determines that bidding should not end because it has not yet received messages confirming that the Participant Processors 401 and 405 have entered the pending state. Participant B Processor 405 reaches its end of bidding time and changes state to pending at 404. At that time, Participant B Processor 405 disables the ability to submit a bid from that processor 405. At 406, Participant A Processor 401 sends a message to the Auction Processor 403 indicating that no more bids will be submitted from that processor 401. The Auction Processor 403 again determines whether bidding should end in the auction at 408. Only Participant B Processor 405 has confirmed its pending state at that time, therefore, the Auction Processor 403 permits the auction to remain open. At 410, Participant A Processor 401 submits a bid to the Auction Processor 403. The Auction Processor 403 accepts the bid and confirms that acceptance by way of a message sent to Participant A Processor at 412. At 414, the newly accepted bid is broadcast to the other Participant Processors 401 and 405. Participant A Processor 401 changes to the pending state at 416 and sends a confirming message to that effect at 418. At 420, when the Auction Processor 403 checks to determine whether the open state of the auction should end, the Auction Processor 403 determines that it has received pending confirmations from all participating participant processors and ends bidding. At 422, the Auction Processor 403 closes the auction, and at 424 and 426 the Auction Processor informs the participating Participant Processors 401 and 405 that the auction is closed.

In the auction scenario described in connection with time line 400, Bidder A submitted a bid from Participant A Processor 401 after Participant B Processor 405 converted to the pending state such that Bidder B was unable to respond to that bid with a bid of its own. In time line 400, that late bid may have been accepted without allowing Bidder B an opportunity to respond with another bid of its own because, for example, the bid placed by Bidder A may not have bettered or, in the case of a reverse auction, been lower than the lowest bid placed by Bidder B. Thus, in that example, Bidder B may be awarded a contract stemming from the auction even though Bidder B was unable to respond to the last bid placed by Bidder A. In certain other circumstances, however, it is desirable to hold the auction open after the scheduled closing time, also known as overtime, to permit bidders an opportunity to place additional bids after they have entered the pending state.

Figure 12 is a time line 430 that illustrates an auction segment wherein a participant processor is permitted to change state from pending back to open to provide an opportunity for a bidder utilizing that processor to respond to a late bid submitted by another bidder. In time line 430, an auction processor is represented by the center vertical line 433, a first participant processor labeled "Participant A Processor" is represented by the left vertical line 431, and a second participant processor labeled "Participant B Processor" is represented by the left vertical line 435. In time line 430, the Auction Processor 433 determines as previously described whether to place the auction in a pending state at 432. At that time, the Auction Processor 433 allows the auction to remain open because it has not yet received pending confirmation from the Participant Processors 431 and 435. At 434, Participant B Processor 435 switches to a pending state such that Bidder B may not submit bids at that time. At 436, Participant B Processor 435 sends a message to the Auction Processor 433 informing the Auction Processor 433 that Participant B Processor 435 is pending. At 438, the Auction Processor 433 determines that it has received a pending confirmation from Participant B Processor 435 but has not received a pending confirmation from Participant A Processor 431. The auction, therefore, remains open. Participant A Processor 431 submits a new bid at 440, after Participant B Processor 435 has changed to the pending state. The Auction Processor 433 determines that the bid placed at 440 should be accepted because, for example, it was received timely either prior to closing time as perceived at the Auction Processor 433 or prior to the expiration of an allowable time period after the closing time occurred at the Auction Processor 433. At 442, the Auction Processor 433 determines that all bidders are to receive an additional open period, or overtime period, during which they may respond to the bid received at 440. The Auction Processor 433 also sends a message to Participant A Processor 431 at 444, indicating acceptance of the bid placed at 440. The bid placed at 440 is broadcast to all other bidders at 446, and overtime notification is sent to all bidders at 448 and 450. That overtime notification will enable the auction to return to the open state so that each bidder may respond by placing a bid of their own. Of course, steps 442 through 450 may be performed in varying order. Furthermore, multiple overtimes may occur in an auction, in response to bids placed during overtime periods.

In another embodiment of the present invention that may be utilized in connection with the embodiments described in Figures 9-12, messages sent from each participant processor may be ordered separately. For example, each message sent by a particular participant processor may have a numbered message identifier attached thereto, and those message identifiers may be numbered consecutively in the order the messages are sent. In that embodiment, the message identifier will indicate the order in which the messages were sent. The Auction Processor may furthermore read that message identifier and, for example, not accept any bid messages having a message identifier that is greater than the message identifier attached to a bidder pending confirmation.

In one embodiment of the present invention, the participant processor is not permitted to determine when the end of bidding time passes. Rather, the auction processor determines when the auction closes. When the auction processor makes the closing determination, it may send a message to each participant processor instructing those participant processors to close the auction. The participant processors may then respond with confirmation that the processors are ending bidding or entering a pending or closed state. In that embodiment, ordering is also desirable, because it provides a simple way of determining whether a bid was placed prior to the closing of the auction at the participant processor from which the bid was submitted. Use of a time buffer, similar to that described hereinabove, wherein the close auction order is not sent until the closing time has occurred and the time buffer has passed in addition, may be desirable in such an embodiment.

A bid that is placed from a participant processor after that processor changed state to pending may be received at the auction processor prior to receipt of the pending confirmation message because of many factors including the size and routing of each of those messages. Thus, by using consecutively numbered message identifiers, bid messages ordered after the pending confirmation message may be rejected by the auction processor. Similarly, messages sent by a participant processor may be stamped with the auction time at which they were sent and the order in which they were sent may be determined by reference to that time stamp.

The consecutive numbering embodiment also provides another advantage. The message identifiers may be utilized to verify message delivery. For example, where a message identifier is missing, the auction processor could verify that a message sent by a participant processor was not received. The contents of that message may then be accepted through the network or via another communication method such as, for example, telephone.

Also, in an auction embodiment wherein the auction processor confirms receipt of each message received from each participant processor, the message identifiers may be utilized to filter messages received more than once. For example, a participant processor may send a message to the auction processor. If the participant processor does not receive a response in a predetermined amount of time, the participant processor may send the message a second time to assure delivery to the auction processor. Both of those messages may furthermore have the same message identifier attached thereto. The auction processor may, therefore, utilize that message identifier to recognize when a message is received more than once, and reject all repeat messages having the same message identifier.

The present invention, therefore, solves the problem of whether to accept a bid at an auction processor when that bid is sent at a time when the participant processor indicates that the end of bidding time has not yet passed, but when the auction processor indicates that the end of bidding time has passed. It is noted that such a situation may occur in a variety of ways including imperfect synchronization between the bidder and auction processors and due to network latency. That situation may also occur when a time change is maliciously entered into a participant processor to enable the bidder utilizing that processor to place a bid after auction has closed. The present invention also minimizes the danger of such a malicious change by regularly updating auction time at each participant processor, limiting the time after end of bidding time passes at the auction processor that a bid may be accepted, and reopening an auction when a late bid is received.

While the invention has been described in detail and with reference to specific embodiments thereof, it will be apparent to one skilled in the art that various changes and modifications can be made therein without departing from the spirit and scope thereof. In particular, it should be noted that while the auction functions described above have been described in the context of downward pricing (reverse) auctions, the auction functions can be equally applied to upward pricing (forward) auctions. Thus, it is intended that the present invention cover the modifications and variations of this invention provided they come within the scope of the appended claims and their equivalents.

## Claims

1. A method of synchronizing a closing of a network auction, comprising:
determining a message travel time between a participant processor and an auction processor;
establishing a sponsor auction time at the auction processor;
calculating a bidder auction time by adding the message travel time to the auction processor time;
setting a participant processor clock to the bidder auction time; and
accepting a bid at the auction processor only if the bid was sent prior to a predetermined end of bidding time.

2. The method of claim 1, wherein said establishing a bidder auction time occurs at the auction processor.

3. The method of claim 1, wherein the network includes at least two networked computers participating in the auction.

4. The method of claim 1, wherein said determining a message travel time includes:
sending an initiating message from an auction processor to a participant processor;
receiving a return message at the auction processor from the participant processor;
establishing a round-trip elapsed travel time equal to a difference between a time when the initiating message was sent and a time when the return message was received; and
calculating the message travel time by halving the round-trip travel time.

5. The method of claim 1, wherein said determining a message travel time includes:
receiving a time stamped message at an auction processor from a participant processor; and
calculating the message travel time by subtracting a time stamped on the received message from a current time at the auction processor.

6. The method of claim 5, further comprising sending an initiating message from an auction processor to a participant processor.

7. The method of claim 1, wherein permitting the participant processor to submit a bid to the auction processor includes permitting the participant processor to submit a bid only until a predetermined time passes at the auction processor.

8. The method of claim 1, wherein permitting the participant processor to submit a bid to the auction processor includes permitting the participant processor to submit a bid only until a predetermined time passes at the participant processor.

9. The method of claim 1, wherein accepting a bid at the auction processor includes time stamping the bid at the participant processor, further comprising accepting the bid at the auction processor only if the time stamped is a time prior to the closing time.

10. The method of claim 1, wherein accepting a bid at the auction processor includes:
ordering messages sent by the participant processor, wherein the messages include bid messages and end of bidding messages;
sending an ordered end of bidding message from the participant processor to the auction processor; and
not accepting a bid included in a bid message at the auction processor that is ordered subsequent to the end of bidding message.

11. The method of claim 10, further comprising sending an end bidding instruction from the auction processor to the participant processor, wherein said ordered end of bidding message is sent in response to the end bidding instruction.

12. The method of claim 10, wherein said ordering includes numbering messages such that each message includes a number that is higher than a previous message.

13. The method of claim 1, wherein accepting a bid at the auction processor includes:
ordering messages sent by the participant processor, wherein said messages include a bid message and an end of bidding message;
receiving an end of bidding message from the participant processor at the auction processor; and
not accepting a bid at the auction processor after receiving the end of bidding message.

14. The method of claim 1, wherein accepting a bid at the auction processor includes:
ordering messages sent by the participant processor, wherein said messages include a bid message and an end of bidding message;
sending a end of bidding message from the auction processor to the participant processor at a time;
waiting a predetermined period of time from the time the end of bidding message was sent; and
not accepting a bid at the auction processor after the predetermined period of time has elapsed.

15. The method of claim 1, further comprising updating the participant processor clock to the bidder auction time at intervals.

16. The method of claim 15, wherein said intervals are regular.

17. The method of claim 1, wherein the bid is received at the auction processor after the end of bidding time.

18. The method of claim 1, wherein at least two participant processors are participating in the auction, further comprising ending bidding in the auction after receiving confirmation that each participant processor clock has reached the end of bidding time.

19. The method of claim 18, further comprising placing the auction in a pending state and subsequently closing the auction.

20. The method of claim 1, wherein at least a first participant processor and a second participant processor are participating in the auction, further comprising accepting a bid from the first participant processor after the second participant processor has reached the end of bidding time.

21. The method of claim 20, further comprising reopening the auction after accepting the bid from the first participant processor.

22. The method of claim 1, wherein said determining a message travel time includes:
sending an initiating message from an auction processor to a participant processor;
receiving a return message at the auction processor from the participant processor; and
establishing the message travel time by calculating a difference between a time when the initiating message was sent and a time when the return message was received.

23. The method of claim 1, wherein the auction is a reverse auction.

24. The method of claim 1, wherein the auction is a forward auction.

25. The method of claim 1, wherein the participant processor is electronically coupled to the auction processor during the conducting of the auction.

26. A method of validating that a bid is placed by a participant processor networked with an auction processor prior to a predetermined end of bidding time, comprising:
setting a time clock at the participant processor to an auction time; and
accepting a bid sent from the participant-processor to the auction processor only until the predetermined end of bidding time occurs, according to the participant processor time clock.

27. The method of claim 26, further comprising synchronizing a first bidder auction time at the participant processor time clock with an auction time at the auction processor.

28. A method of validating that a bid is placed by a participant processor networked with an auction processor prior to a predetermined end of bidding time, comprising:
synchronizing a time clock at the participant processor with a time clock at the auction processor; and
accepting a bid sent from the participant processor to the auction processor only until a predetermined end of bidding time occurs at the auction processor time clock.

29. The method of claim 28, wherein the auction processor sends a message to the participant processor when the end of bidding time occurs at the auction processor time clock.

30. The method of claim 28, wherein the participant processor sends a message to the auction processor acknowledging that the end of bidding time has occurred.

31. The method of claim 28, wherein the participant processor may be utilized to send a bid to the auction processor until the end of bidding time occurs at the participant processor.

32. The method of claim 28, wherein the auction processor transitions to a pending state when the end of bidding time occurs.

33. The method of claim 28, wherein the auction processor transitions to a closed state after the end of bidding time occurs.

34. A method of verifying that a bid is placed prior to an end of bidding time, comprising:
ordering messages sent by a networked participant processor;
receiving an end of bidding message from the participant processor at a networked auction processor; and
accepting a bid at the auction processor, placed by the participant processor, only if a message containing the bid is ordered prior to the end of bidding message.

35. The method of claim 34, wherein said ordering messages includes ordering messages chronologically.

36. The method of claim 34, further comprising sending a message from the auction processor to the participant processor requesting that the participant processor return the end of bidding message to the auction processor.

37. A system for synchronizing a closing of a network auction, comprising:
an auction processor attached to a network; and
a participant processor attached to said network;
wherein said auction processor contains instructions which, when executed by said processor, cause said processor to:
determine a message travel time between said participant processor and said auction processor;
establish a sponsor auction time;
calculate a bidder auction time by adding the message travel time to the auction processor time;
send a participant processor clock setting to said participant processor; and
accept a bid from said participant processor only if the bid was sent prior to a predetermined end of bidding time.

38. The system of claim 37, wherein said auction processor and said participant processor communicate through an auction coordinator.

39. The system of claim 37, wherein said auction processor and said participant processor communicate through the Internet.

40. A bidding device operated by a bidder during an online auction and coupled to an auction processor via a network, comprising:
a clock; and
a processor coupled to the clock, the processor having instructions that, when executed by the processor set said clock to a bidder auction time.
